# EUROPÄISCHE PATENTSCHRIFT

(11) **EP 0 621 669 B1**
(45) Veröffentlichungstag und Bekanntmachung des Hinweises auf die Patenterteilung: **30.10.1996**
(21) Anmeldenummer: 94104070.1
(22) Anmeldetag: 16.03.1994
(51) Int. Cl.: H02B 1/46

(54) **Gehäuse mit eingelegter Frontplatte**
Box with inserted front panel
Boîtier avec panneau frontal inséré

(30) Priorität: 21.04.1993 DE 4312850
(43) Veröffentlichungstag der Anmeldung: 26.10.1994
(73) Patentinhaber: BOPLA GEHÄUSE SYSTEME GmbH, D-32257 Bünde (DE)
(72) Erfinder: Niehausmeier, Uwe, D-32289 Rödinghausen (DE); Krömer, Andreas, D-32049 Herford (DE)
(74) Vertreter: Thielking, Bodo, Dipl.-Ing.

(56) Entgegenhaltungen:
- DE-A- 3 908 330
- DE-U- 9 204 455

## Beschreibung

Die Erfindung betrifft ein Gehäuse mit eingelegter Frontplatte, die von einem Frontrahmen übergriffen wird und zwischen Auflagebereichen und dem Frontrahmen fixiert ist gemäß dem Oberbegriff des Anspruchs 1. Ein gehäuse dieser Art ist aus DE-U-92 04 455 bekannt. Bei bekannten derartigen Gehäusen müssen für unterschiedlich dicke Frontplatten unterschiedliche Frontrahmen vorgesehen werden. Dies ist nachteilig besonders bei sogenannten Universalgehäusen, die für unterschiedliche Anwender und unterschiedliche Anwendungsgebiete geeignet sein sollen.

Der Erfindung liegt deshalb die Aufgabe zugrunde, ein Gehäuse der als bekannt vorausgesetzten Art so auszubilden, daß für Frontplatten unterschiedlicher Dicke stets der gleiche Frontrahmen verwendbar ist.

Die Lösung dieser Aufgabe erfolgt mit den Merkmalen des Kennzeichnungsteils von Anspruch 1.

Durch die gestufte Anordnung der unterschiedlichen Auflagebereiche, die treppenartig zum Zentrum hin orientiert sind, kann sichergestellt werden, daß der auf der Außenseite der Frontplatte aufliegende Rand des Grundrahmens stets in der gleichen Ebene verbleiben kann. Für eine Anpassung des Gesamtgehäuses an unterschiedlich dicke Frontplatten genügt es, die Abstände der einander gegenüberliegenden Stirnkanten auf Längs- und Schmalseiten der Frontplatten mit zunehmender Dicke entsprechend zu reduzieren, wie dies der treppenartigen Stufung entspricht.

Es hat sich als besonders zweckmäßig erwiesen, daß die gestuft angeordneten Auflagebereiche auf einem umlaufenden Rahmen vorgesehen sind. Dieser Rahmen ist üblicherweise als separates Bauteil ausgebildet.

Gemäß einem weiteren vorteilhaften Merkmal der Erfindung ist der Rahmen formschlüssig mit dem Gehäuse verbunden.

Nachstehend wird eine bevorzugte Ausführungsform der Erfindung anhand der Zeichnung im einzelnen beschrieben. Es zeigen:

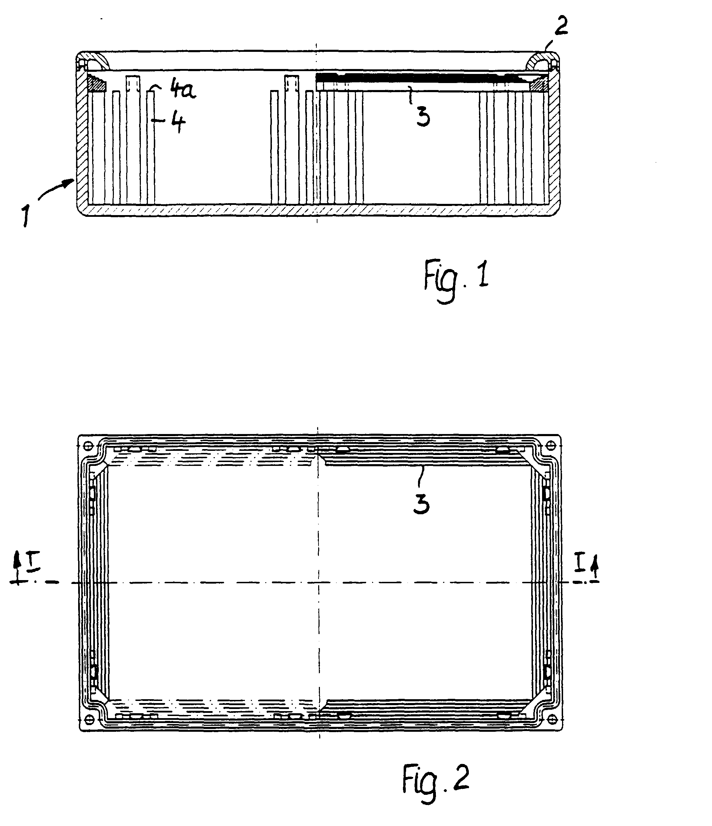

- Figur 1 -: einen Schnitt entlang Ebene I-I in Figur 2 durch das Gehäuse mit Gehäuseunterteil und Frontrahmen, ohne eingelegte Frontplatte,
- Figur 2 -: eine Draufsicht auf das Gehäuseunterteil bei abgenommenem Frontrahmen,
- Figur 3 -: einen Längsschnitt entlang Ebene I-I gemäß Figur 2 durch einen Teilbereich des Gehäuses mit einer eingelegten ersten Frontplatte,
- Figur 4 -: die Darstellung gemäß Figur 3 mit zwei übereinandergelegten Frontplatten,
- Figur 5 -: die Darstellung gemäß Figuren 3 und 4 mit der dicksten einbaubaren Frontplatte.

Das Gehäuse weist ein Gehäuseunterteil 1, einen Frontrahmen 2 und eine Frontplatte 5 bzw. 6 auf, ferner einen umlaufenden Rahmen 3.

Der umlaufende Rahmen 3 ist in das Gehäuseunterteil 1 eingelegt und liegt auf Auflageflächen 4a von nach innen vorspringenden, angeformten Rippen 4. Der Rahmen 3 ist formschlüssig im Gehäuseunterteil 1 festgelegt.

Der Aufbau des Rahmens 3 ist aus den Zeichnungsfiguren 3 bis 5 ersichtlich. Der Rahmen besitzt im dargestellten Ausführungsbeispiel insgesamt fünf Auflagestufen oder Auflagebereiche 3a, 3b, 3c, 3d, 3e. Diese Auflagebereiche sind treppenartig angeordnet in der Weise, daß der Auflagebereich 3b den geringsten Abstand von der durch den vorderen Rand des Frontrahmens definierten Bezugsebene einhält. Einen zunehmend größeren Abstand halten die Auflagebereiche 3c, 3d, 3e und 3a ein. Zu jedem Auflagebereich gehört eine diesen nach außen begrenzende Stirnseite, diese ist für die Auflagefläche 3b durch die Innenwand des Gehäuseunterteils 1 gebildet, bei den übrigen Auflagebereichen durch die parallel zur Gehäusewand sich erstrekkende Verbindungsfläche zwischen benachbarten Auflagebereichen.

Die Abstände einander gegenüberliegender Stirnseiten, die zum gleichen Auflagebereich gehören, nehmen von außen nach innen ab.

Den größten Abstand hat die durch die Innenwand des Gehäuseunterteils gebildete Stirnseite, die zum Auflagebereich 3b gehört. Auf diesen Auflagebereich 3b wird die dünnste Frontplatte 5 aufgelegt. Der Abstand der Frontseite der Frontplatte 5 von der Bezugsebene 7 hat das Maß a.

Auf den Auflagebereich 3d werden zwei Frontplatten 5 gleicher Dicke, die übereinandergelegt sind, aufgelegt. Damit diese Frontplatten auf den Auflagebereich 3d passend aufgelegt werden können, müssen ihre Flächenmaße so bemessen sein, daß sie dem Abstand der zu 3d zugehörigen Stirnkante entsprechen.

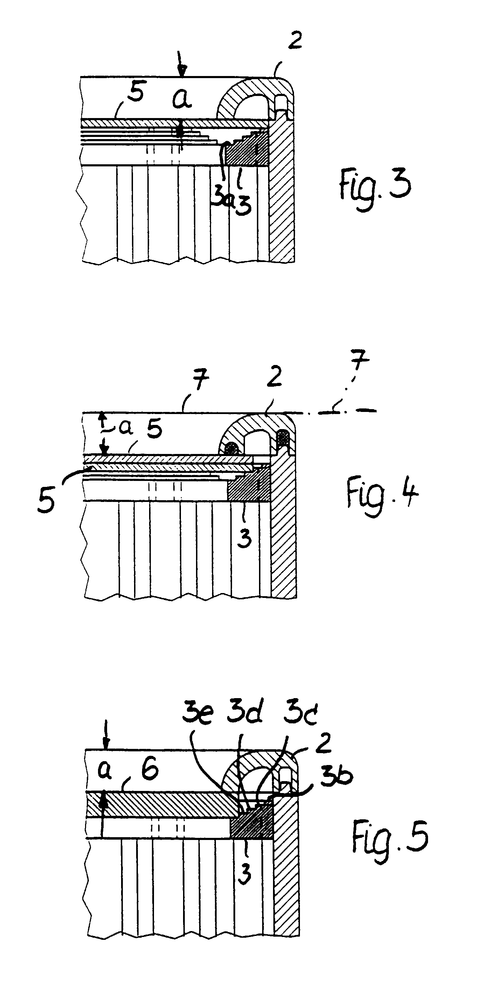

In Figur 5 schließlich ist die Situation mit einer Frontplatte 6 dargestellt, welche die größte Dicke aufweist. Diese Frontplatte liegt auf der untersten Stufe bzw. auf dem untersten Auflagebereich 3a auf. Die Grundfläche dieser dicksten Frontplatte ist die kleinste von allen Frontplatten. Die Bemessung ist so gewählt, daß die Frontplatte 6 nicht auf dem benachbarten Auflagebereich 3e aufliegen kann, sondern ausschließlich auf dem Auflagebereich 3a.

Bei allen dargestellten Ausführungsbeispielen ist der Abstand a stets gleich.

## Patentansprüche

1. Gehäuse mit eingelegter Frontplatte (5; 6), die von einem Frontrahmen (2) übergriffen wird und zwischen Auflagebereichen und dem Frontrahmen (2) fixiert ist, wobei der Frontrahmen (2) auf jeweils der Außenfläche jeder Frontplatte (5; 6) aufliegt
dadurch gekennzeichnet,
daß unterschiedliche, gestuft angeordnete Auflagebereiche (3a; 3b; 3c; 3d; 3e) in unterschiedlichem Abstand von der Frontseite vorgesehen sind, wobei die Abstände einander gegenüberliegender, die Auflagebereiche begrenzender Stirnseiten, die zum jeweils gleichen Auflagebereich gehören, von außen nach innen abnehmen, derart, daß die Frontplatte (6) mit der größten Dicke die jeweils kleinste Grundfläche und die Frontplatte mit der geringsten Dicke die jeweils größte Grundfläche aufweist.

2. Gehäuse nach Anspruch 1,
dadurch gekennzeichnet,
daß die gestuft angeordneten Auflagebereiche (3a; 3b; 3c; 3d; 3e) auf einem umlaufenden Rahmen (3) vorgesehen sind.

3. Gehäuse nach Ansprüchen 1 und 2,
dadurch gekennzeichnet,
daß der Rahmen (3) formschlüssig mit dem Gehäuseunterteil (1) verbunden ist.

## Claims

1. Housing with inserted front plate (5;6) which is engaged by a front frame (2) and is fixed between the contact bearing areas and front frame (2) wherein the front frame (2) rests on the outer face of each front plate (5;6),
characterised in that different contact bearing areas (3a;3b; 3c;3d; 3e) arranged in steps are provided at different distances from the front side wherein the distances between opposing end sides defining the contact areas and belonging to each same contact area decrease from outside towards the inside so that the front plate (6) with the greatest thickness has the smallest base face and the front plate with the smallest thickness has the relevant largest base face.

2. Housing according to claim 1 characterised in that the stepped contact bearing areas (3a;3b;3c;3d;3e) are provided on a circumferential frame.

3. Housing according to claims 1 and 2 characterised in that the frame is connected in keyed engagement with the lower part (1) of the housing.

## Revendications

1. Boîtier avec panneau frontal inséré (5; 6) embrassé d'en haut par un cadre frontal (2) et fixé entre des zones d'appui et le cadre frontal (2), le cadre frontal (2) reposant respectivement sur la surface extérieure de chaque panneau frontal (5; 6),
caractérisé en ce que
des zones d'appui disposées en escalier zones d'appui (3a, 3b, 3c, 3d, 3e) sont prévues à différents intervalles, les intervalles des côtés frontaux opposés l'un à l'autre et limitant les zones d'appui décroissant de l'extérieur vers l'intérieur de sorte que le panneau frontal (6) présentant la plus grosse épaisseur possède la surface de base la plus petite, tandis que le panneau frontal présentant la plus faible épaisseur possède la plus grande surface de base.

2. Boîtier selon la revendication 1,
caractérisé en ce que
les zones d'appui (3a, 3b, 3c, 3d, 3e) échelonnées sont prévues sur un cadre continu (3).

3. Boîtier selon la revendication 1,
caractérisé en ce que
le cadre (3) est relié en engagement positif à la partie inférieure (1) du boîtier.
